# EUROPEAN PATENT APPLICATION

(11) **EP 4 321 257 A1**
(43) Date of publication of application: **14.02.2024**
(21) Application number: 22189799.4
(22) Date of filing: 10.08.2022
(51) Int. Cl.: B05B 1/16, G05B 19/418, G06Q 10/08, G06Q 30/0601, B05B 9/01

(54) **WATER NOZZLE SPRAYER WITH CUSTOMIZED SYSTEM THEREOF**

(71) Applicant: Shin Tai Spurt Water Of The Garden Tools Co., Ltd., Lu-Kang Town, Chang-Hua Hsien (TW)
(72) Inventor: Chen, Chin-Yuan, CHANG-HUA HSIEN (TW)
(74) Representative: Lang, Christian

(57) **Abstract**

A water nozzle sprayer with customized system thereof may include a sprayer and a plurality of different spray heads, and the sprayer is adapted to have different number of spray heads to adjustably perform different patterns. The manufacturing of the water nozzle sprayer is processed through a client interface and a manufacturer interface cooperating with an automated machine. Each of the spray heads has a main body, and an identification portion is formed thereon to indicate the color of the main body.

## Description

### FIELD OF THE INVENTION

The present invention relates to a water nozzle sprayer with customized system thereof and more particularly to combining a specific industry standard and the internet to intelligently manufacture water nozzle sprayer.

### BACKGROUND OF THE INVENTION

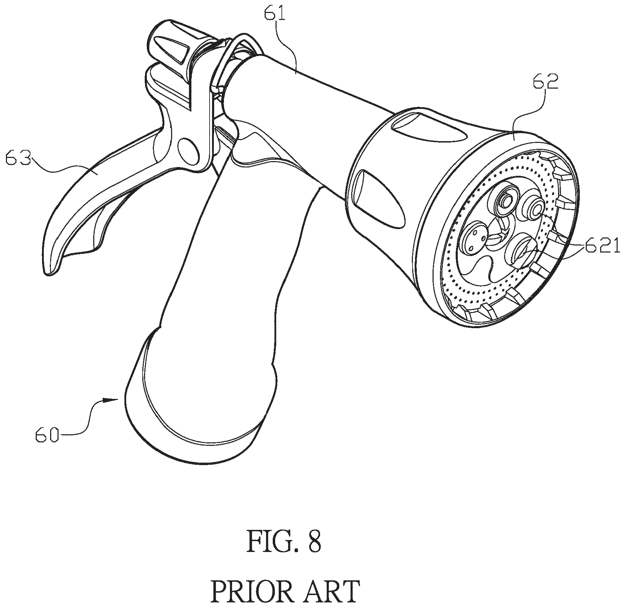

Referring to FIG 8, the conventional water nozzle sprayer (60) comprises a main body (61), and a rotatable portion (62) is formed at the front end of the main body (61), and at least one spraying hole (621) is formed integrally on the rotatable portion (62). The user can rotate the rotatable portion (62) to switch into one of the different spraying holes (621) so as to achieve different spray amount and spray shapes. Also, the rear end of the main body (61) comprises a pressing handle (63) to control on/off operation of the water nozzle sprayer (60).

However, the conventional water nozzle sprayer has following disadvantages: (i) the spraying hole (621) is integrally formed on the rotatable portion (62) so that the consumers cannot select the spraying types according to their needs or preferences; and (ii) after manufactured, the water nozzle sprayers (60) are distributed to the stores, but when the spraying types of the sprayer (60) do not meet the needs of consumers, it will be dull sales or be returned, leading to higher costs. Therefore, there remains a need for a new and improved design for a water nozzle sprayer with customized system thereof to overcome the problems presented above.

### SUMMARY OF THE INVENTION

The present invention provides a water nozzle sprayer with customized system thereof comprising a sprayer and a plurality of different spray heads, and the sprayer is adapted to have different number of different spray heads to adjustably perform different patterns. The automated manufacturing of the water nozzle sprayer is processed through a client interface and a manufacturer interface cooperating with an automated machine. Each of the spray heads has a main body, and an identification portion is formed thereon to indicate the color of the main body. The front end of the main body comprises at least one type of spraying holes, and the spray heads are formed with different sizes, shapes, amounts, arrangements of the spraying holes to perform different water patterns. The identification portions having different colors respectively correspond to different types of the spray heads. The client interface and the manufacturer interface are connected through the internet, so that, through the client interface, customer is configured to remotely select and order his customized spray heads of the sprayer, and the manufacturer is adapted to pick up materials and manufacture the customized spray heads installed on the sprayer through the automated machine according to the order received in the manufacturer interface, so as to complete automatic customized manufacturing process. The automated machine comprises at least a material house, an automated picking machine, and an automated assembly machine, and the material house has a plurality of storing locations to respectively place different spray heads which respectively have different identification portions and spraying holes. The automated picking machine and the automated assembly machine respectively have recognition devices thereon to recognize the identification portions of the spray heads, thereby achieving precise picking and assembling of the full automatic process.

Comparing with conventional water nozzle sprayer, the present invention is advantageous because: (i) it is more convenient for consumers when the types and arrangement of the spray heads on the sprayer can be adjusted by themselves according to their actual needs; (ii) the water nozzle sprayer is customized after receiving orders, which lowers the inventory pressure, manufacturing cost, and problems due to return and replacement; and (iii) the manufacturing process of the water nozzle sprayer goes through industry 4.0, which is combined with the internet to realize intelligent production that uses of advanced intelligent algorithm, so as to provide the best scheduling, to shorten the delivery time, and to carry out quality and diversified production.

### BRIEF DESCRIPTION OF THE DRAWINGS

FIG. 1 is a block flow chart of a client interface and a manufacturer interface of a water nozzle sprayer with customized system thereof in the present invention.
FIG. 2 is a first preview of the process of picking and arranging spray heads of the water nozzle sprayer from the client interface in the customized system of the present invention.
FIG. 3 is a second preview of the process of picking and arranging the spray heads of the water nozzle sprayer from the client interface in the customized system of the present invention.
FIG. 4 is a schematic view illustrating the works of an automated picking machine of an automatic machine in the customized system of the present invention.
FIG. 5 is a schematic view illustrating the works of an automated assembly machine of the automatic machine in the customized system of the present invention.
FIG.6 is a plan view of a finished sprayer with the customized spray heads of the present invention.
FIG. 7 is a three-dimensional view of the finished sprayer with the customized sprayer heads of the present invention.
FIG. 8 is a prior art.

### DETAILED DESCRIPTION OF THE INVENTION

The detailed description set forth below is intended as a description of the presently exemplary device provided in accordance with aspects of the present invention and is not intended to represent the only forms in which the present invention may be prepared or utilized. It is to be understood, rather, that the same or equivalent functions and components may be accomplished by different embodiments that are also intended to be encompassed within the spirit and scope of the invention.

Unless defined otherwise, all technical and scientific terms used herein have the same meaning as commonly understood to one of ordinary skill in the art to which this invention belongs. Although any methods, devices and materials similar or equivalent to those described can be used in the practice or testing of the invention, the exemplary methods, devices and materials are now described.

All publications mentioned are incorporated by reference for the purpose of describing and disclosing, for example, the designs and methodologies that are described in the publications that might be used in connection with the presently described invention. The publications listed or discussed above, below and throughout the text are provided solely for their disclosure prior to the filing date of the present application. Nothing herein is to be construed as an admission that the inventors are not entitled to antedate such disclosure by virtue of prior invention.

In order to further understand the goal, characteristics and effect of the present invention, a number of embodiments along with the drawings are illustrated as following:

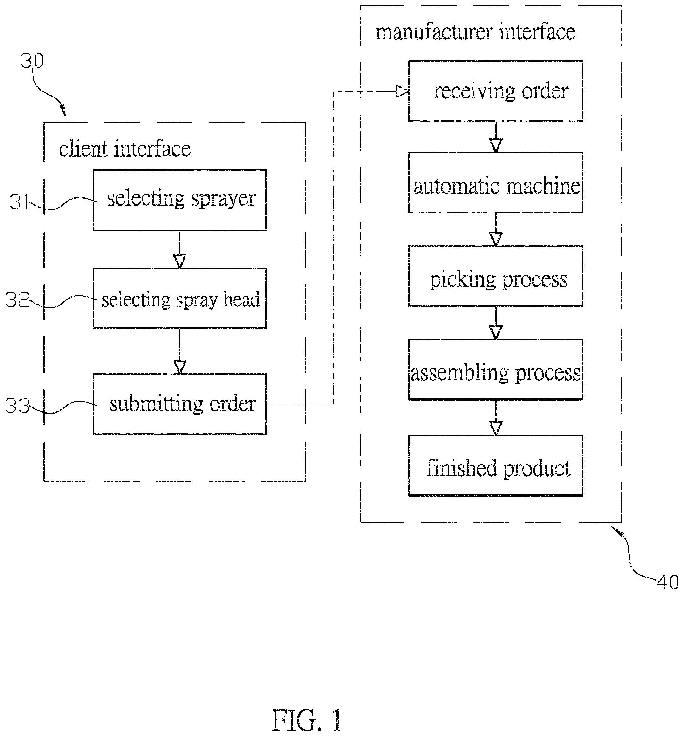

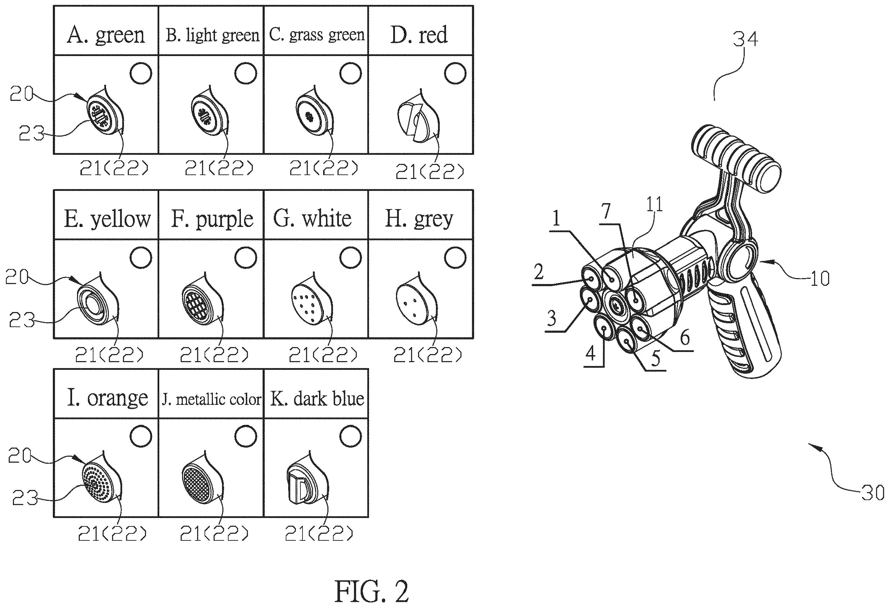

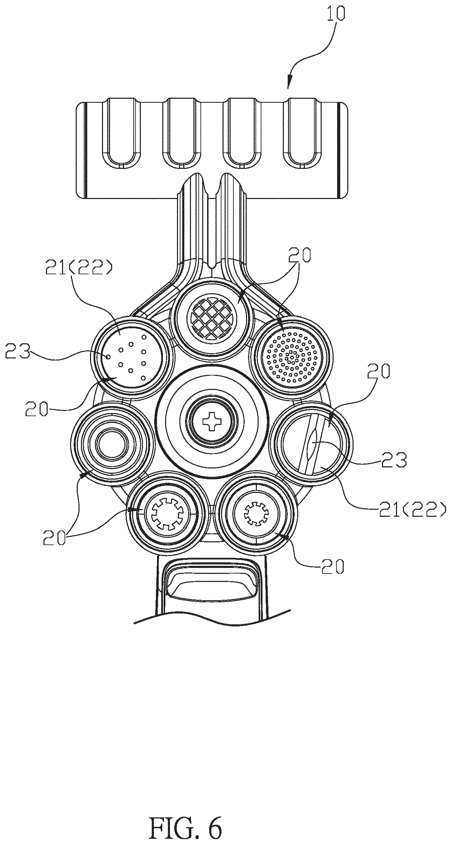

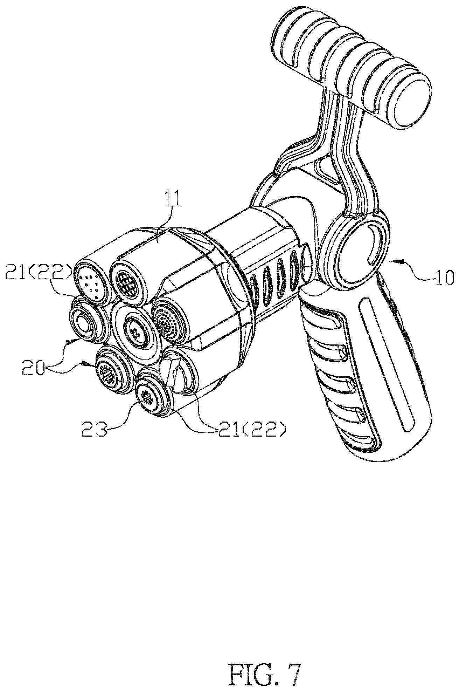

Referring to FIGs. 1 to 7, the present invention provides a water nozzle sprayer with customized system thereof comprising a sprayer (10) and a plurality of different spray heads (20), and the sprayer (10) is adapted to have different number of different spray heads (20) such as three, four, and five installed thereon to adjustably perform different patterns. The automated manufacturing of the water nozzle sprayer is processed through a client interface (30) and a manufacturer interface (40) cooperating with an automated machine (50). Moreover, each of the spray head (20) has a main body (21), and an identification portion (22) is formed thereon to indicate the color of the main body (21). Also, the front end of the main body (21) comprises at least one type of spraying holes (23), and the spray heads (20) are formed with different sizes, shapes, amounts, arrangements of the spraying holes (23) to perform different water patterns. The identification portions (22) with different colors respectively correspond to different types of the spray heads (20) (such as spray head A provided with shower pattern being green, spray head B provided with stream pattern being light green, and so on, which are shown in FIG. 2). The client interface (30) and the manufacturer interface (40) are connected through the internet, so that, through the client interface (30), customer is configured to remotely select and order his customized spray heads (20) of the sprayer (10), and the manufacturer is adapted to pick up materials and manufacture the customized spray heads (20) installed on the sprayer (10) through the automated machine (50) according to the order received in the manufacturer interface (40), so as to complete automatic customized manufacturing process. Furthermore, the automated machine (50) comprises at least a material house (51), an automated picking machine (52), and an automated assembly machine (53), and the material house (51) has a plurality of storing locations (511) to respectively place different spray heads (20) which respectively have different identification portions (22) and spraying holes (23). Moreover, the automated picking machine (52) and the automated assembly machine (53) respectively have recognition devices thereon to recognize the identification portions (22) of the spray heads (20), thereby achieving precise picking and assembling of the full automatic process.

In one embodiment, the client interface (30) and the manufacturer interface (40) are configured to be operated on computers.

In another embodiment, the client interface (30) and the manufacturer interface (40) are configured to be operated on mobile devices such as smart phones and tablets.

In still another embodiment, referring to FIG. 1, at least, a first select column (31), a second select column (32), and a third select column (33) are on the client interface (30), and the first select column (31) is "selecting sprayer" which is provided to select the number of patterns that the sprayer (10) has, and the second select column (32) is "selecting spray head" that is provided to select each spray heads (20) of the sprayers (10) for different patterns, and after completing the selections of the sprayer (10) and spray heads (20), the user is adapted to click the third column (33) that is "submitting order" to complete order.

In a further embodiment, the sprayer (10) is configured to have four to ten different spraying patterns.

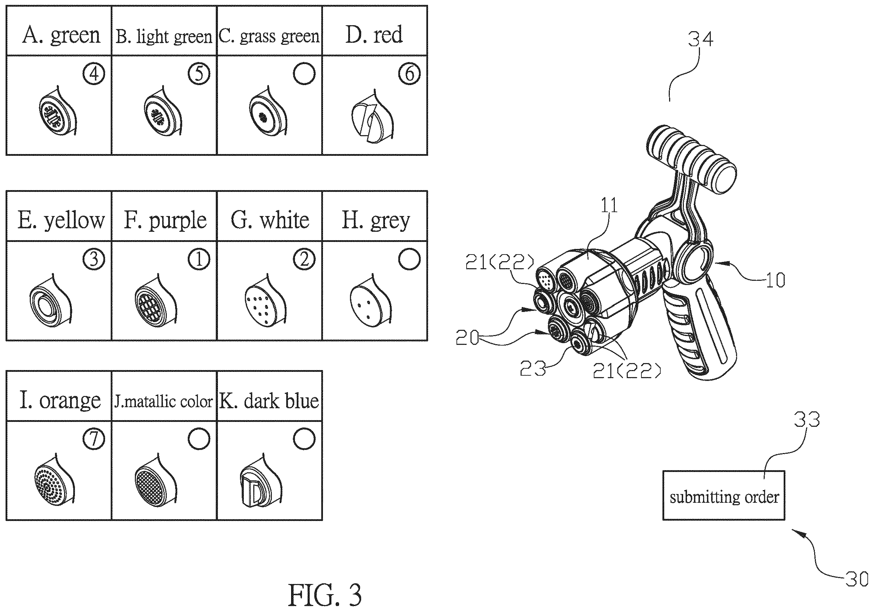

In still a further embodiment, referring to FIGs. 2 and 3, the client interface (30) comprises a preview section (34) to show the configuration of actual product after selecting the sprayer (10) and the spray heads (20), and through clicking on the preview section (34), the user is adapted to arrange the sequence of the spray heads (20).

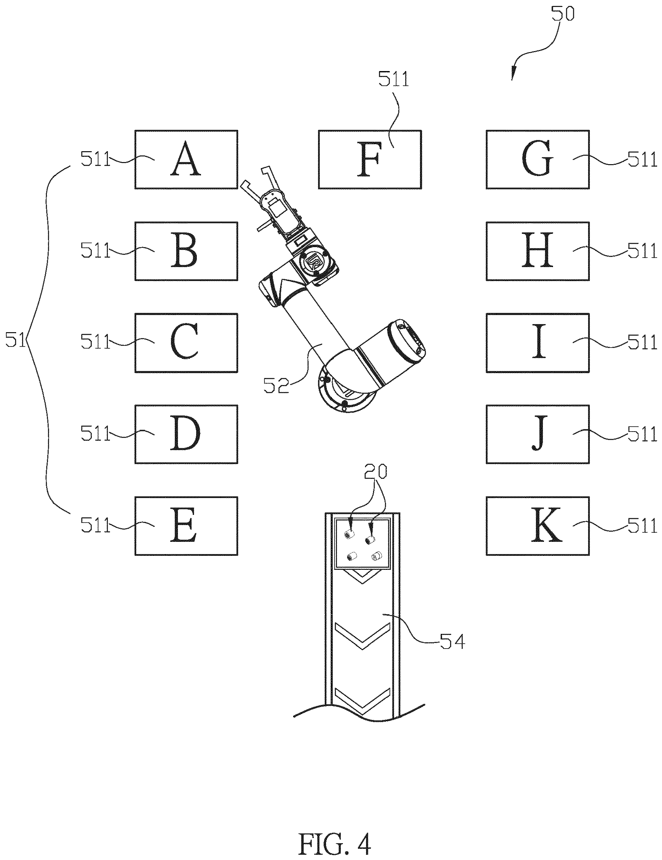

In a preferred embodiment, referring to FIG. 4, the material house (51) comprises a plurality of storing locations (511) including the storing locations A to K which are adapted to store spray heads A to K (20) respectively, wherein the spray head A is colored in green to provide stream pattern; the spray head B is colored in light green to provide center pattern; the spray head C is colored in grass green to provide jet pattern; the spray head D is colored in red to provide flat pattern; the spray head E is colored in yellow to provide cone pattern; the spray head F is colored in purple to provide foam pattern; the spray head G is colored in white to provide large mist pattern; the spray head H is colored in grey to provide mist pattern; the spray head I is colored in orange to provide shower pattern; the spray head J is colored in metallic color to provide large shower pattern; and the spray head K is colored in dark blue to provide angle pattern; and the spray heads (20) have different colors of identification portions (22) thereon to distinguish each other in spraying patterns.

In another preferred embodiment, the spray head (20) is manufactured in the method of injection molding, and the spray heads (20) are respectively manufactured through different molds with dyeing the injection materials.

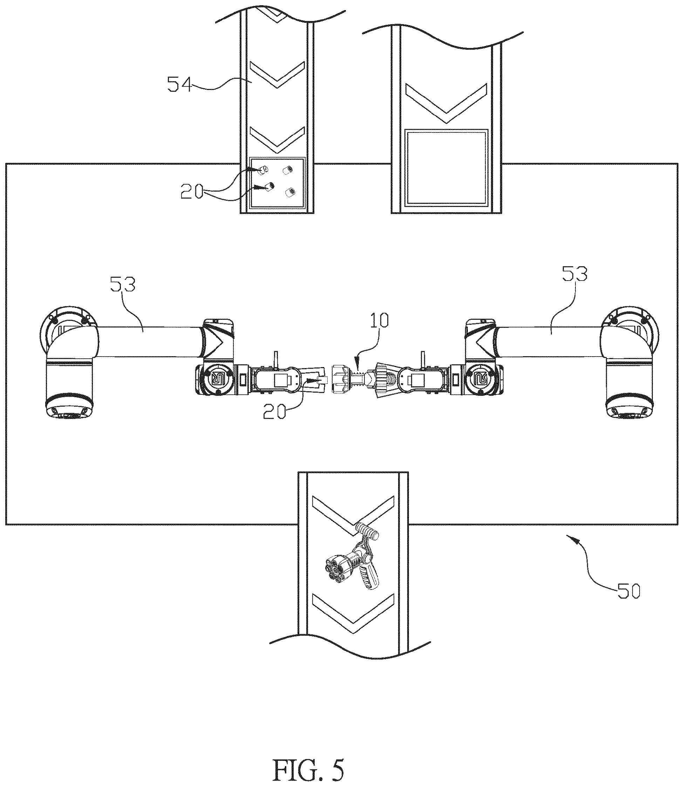

In still another preferred embodiment, referring to FIGs. 4 and 5, the automated picking machine (52) and the automated assembly machine (53) are robotic arms.

In an advantageous embodiment, the automated picking machine (52) and the automated assembly machine (53) are connected through a conveyor (54) (as shown in FIGs. 4 and 5).

In another advantageous embodiment, the recognition devices of the automated picking machine (52) and the automated assembly machine (53) are equipped with high resolution lens.

In still another advantageous embodiment, a rotating head (11) formed at the front end of the sprayer (10) comprises a plurality of accommodating holes, and the automated assembly machine (53) is configured to load the spray heads (20) one by one into the accommodating holes so as to complete the finished product of water nozzle sprayer (as shown in FIGs. 5 to 7).

Comparing with conventional water nozzle sprayer, the present invention is advantageous because: (i) it is more convenient for consumers when the types and arrangement of the spray heads (20) on the sprayer (10) can be adjusted by themselves according to their actual needs; (ii) the water nozzle sprayer is customized after receiving orders, which lowers the inventory pressure, manufacturing cost, and problems due to return and replacement; and (iii) the manufacturing process of the water nozzle sprayer goes through industry 4.0, which is combined with the internet to realize intelligent production that uses of advanced intelligent algorithm, so as to provide the best scheduling, to shorten the delivery time, and to carry out quality and diversified production.

Having described the invention by the description and illustrations above, it should be understood that these are exemplary of the invention and are not to be considered as limiting. Accordingly, the invention is not to be considered as limited by the foregoing description, but includes any equivalents.

## Claims

1. A water nozzle sprayer with customized system thereof comprising a sprayer and a plurality of different spray heads, and the sprayer adapted to have different number of different spray heads to adjustably perform different patterns; the automated manufacturing of the water nozzle sprayer processed through a client interface and a manufacturer interface cooperating with an automated machine;
wherein each of the spray heads has a main body, and an identification portion is formed thereon to indicate the color of the main body; the front end of the main body comprises at least one type of spraying holes, and the spray heads are formed with different sizes, shapes, amounts, arrangements of the spraying holes to perform different water patterns; the identification portions having different colors respectively correspond to different types of the spray heads;
wherein the client interface and the manufacturer interface are connected through the internet, so that, through the client interface, customer is configured to remotely select and order his customized spray heads of the sprayer; the manufacturer is adapted to pick up materials and manufacture the customized spray heads installed on the sprayer through the automated machine according to the order received in the manufacturer interface, so as to complete automatic customized manufacturing process; and
wherein the automated machine comprises at least a material house, an automated picking machine, and an automated assembly machine, and the material house has a plurality of storing locations to respectively place different spray heads which respectively have different identification portions and spraying holes; the automated picking machine and the automated assembly machine respectively have recognition devices thereon to recognize the identification portions of the spray heads, thereby achieving precise picking and assembling of the full automatic process.

2. The water nozzle sprayer with customized system thereof of claim 1, wherein the client interface and the manufacturer interface are configured to be operated on computers.

3. The water nozzle sprayer with customized system thereof of claim 1, wherein the client interface and the manufacturer interface are configured to be operated on mobile devices such as smart phones and tablets.

4. The water nozzle sprayer with customized system thereof of claim 1, wherein at least, a first select column, a second select column, and a third select column are on the client interface, and the first select column is selecting sprayer which is provided to select the number of the spray heads of the sprayer, and the second select column is selecting spray head that is provided to select each spray heads of the sprayers for different patterns, and after completing the selections of the sprayer and spray heads, the user is adapted to click the third column that is submitting order to complete order.

5. The water nozzle sprayer with customized system thereof of claim 4, wherein the client interface comprises a preview section to show the configuration of actual product after selecting the sprayer and the spray heads, and through clicking on the preview section, the user is adapted to arrange the sequence of the spray heads.

6. The water nozzle sprayer with customized system thereof of claim 1, wherein the spray head is manufactured in the method of injection molding, and the spray heads are respectively manufactured through different molds with dyeing the injection materials.

7. The water nozzle sprayer with customized system thereof of claim 1, wherein the automated picking machine and the automated assembly machine are robotic arms.

8. The water nozzle sprayer with customized system thereof of claim 1, wherein the automated picking machine and the automated assembly machine are connected through a conveyor.

9. The water nozzle sprayer with customized system thereof of claim 1, wherein the recognition devices of the automated picking machine and the automated assembly machine are equipped with high resolution lens.

10. The water nozzle sprayer with customized system thereof of claim 1, wherein a rotating head formed at the front end of the sprayer comprises a plurality of accommodating holes, and the automated assembly machine is configured to load the spray heads one by one into the accommodating holes so as to complete the finished product of water nozzle sprayer.
